# EUROPEAN PATENT APPLICATION

(11) **EP 3 805 005 A1**
(43) Date of publication of application: **14.04.2021**
(21) Application number: 18922000.7
(22) Date of filing: 26.12.2018
(51) Int. Cl.: B42D 25/378, B42D 25/305, B42D 25/369, B42D 25/415, G02F 1/09, G02F 1/01

(54) **SECURITY MEDIUM PRINTED ON WHICH COLOR CODE FOR SECURITY INFORMATION IS PRINTED USING MAGNETICALLY COLOR TURNABLE PHOTONIC CRYSTAL INK, AND MANUFACTURING METHOD THEREFOR**

(30) Priority: 07.06.2018 KR 20180065206; 01.11.2018 KR 20180132673; 02.11.2018 KR 20180133346
(71) Applicant: Nanobrick Co., Ltd., Pyeongtaek-si, Gyeonggi-do 17746 (KR)
(72) Inventor: JANG, Bo Seung, Gyeonggi-do 17746 (KR); JOO, Jae Hyun, Gyeonggi-do 17746 (KR)
(74) Representative: M. Zardi & Co S.A.
(86) International application number: PCT/KR2018/016649
(87) International publication number: WO 2019/235707

(57) **Abstract**

The present invention relates to a security medium in which a color code for security information is printed on the surface of the medium using magnetically color tunable photonic crystal ink (MTX), wherein the color code is a color, pattern, image and/or data printed by the magnetic color variable ink, the color, pattern, image, and/or data are changed and appear, according to an observation angle, and the color, pattern, image and/or data appearing at at least one specific observation angle is information obtained by decoding the color code.

## Description

### TECHNICAL FIELD

The present invention relates to a security medium printed with a color code for security information using magnetically color tunable photonic crystal ink and a method of manufacturing the same, in particular to a security medium capable of recognizing initial security information by observing a color or pattern at least one observation angle for each of a series of color codes of different types, for security information, and a method of manufacturing the same. The series of color codes are generated according to the external information by placing the magnetically color tunable photonic crystal ink that changes photonic color according to the applied external magnetic field under a device whose magnetic field is changed differently according to external information.

### BACKGROUND ART

Security media printed with magnetically color tunable photonic crystal pigments is used as a product with a structure suitable for purposes such as security and genuine product authentication by various means and combinations thereof.

In Korean Patent Application Publication No. 10-2018-0018612, the magnetic substance and the general pigment included in the color variable layer inserted between the substrates are configured to be unevenly distributed in one direction by the specific gravity of the solvent and the external force, so that a color variable effect is generated by factors such as external magnetic field and gravity. By using this effect, various types of security information may be displayed, but this requires application of an external magnetic field and may be used only for special purposes since the user must be aware of the information on the color variable effect in advance.

In addition, in Korean Patent Application Publication No. 10-2017-0124763, a information transmission layer constituting the forgery-preventing printed matter is composed of a first variable layer formed by any one of optically variable pigment (OVP), thermal ink, UV ink, fluorescent ink, or hologram, or a combination thereof and a second variable layer formed by a magnetically color tunable photonic crystal ink (MTX), so that a color variable effect by combination of various inks may be implemented in addition to the color variable effect for magnetic field by the MTX. However, this means also requires the application of an external magnetic field, and since the user must be aware of information on the color variable effect in advance, it may be used only for special purposes, and thus it is difficult to use it for general purposes.

### DESCRIPTION OF EMBODIMENTS

### TECHNICAL PROBLEM

The present invention is devised in view of the prior art as described above, and an object of the present invention is to provide a security medium capable of displaying security information by allowing the security information formed by a color code printed on a surface of the medium to change according to an observation angle and to be decoded at a specific observation angle.

### SOLUTION TO PROBLEM

The security medium of the present invention for solving the above problems may include a color code for security information printed on a surface of the security medium using a magnetically color tunable photonic crystal ink (MTX), wherein the color code is a color, pattern, image and/or data printed by the MTX, the color, pattern, image and/or data display are changed according to the observation angle, and the color, pattern, image and/or data displayed at least one observation angle are information obtained by decoding the color code.

In this case, the MTX may be printed on the surface of the medium to form the color code, and then be cured.

In addition, the color code may be formed by applying an external electromagnetic field to the MTX to form an array of particles of the MTX reacting to the electromagnetic field and curing the array of particles.

In addition, the MTX may be cured by heat or ultraviolet light.

In addition, the color code may be that the color, pattern, image and/or data display are changed due to a structural change of the security medium that is bent, contracted or expanded by external pressure applied to the security medium.

In addition, the medium may be a transparent substrate, and the color code may include decoded information reflected from the surface of the security medium, or include decoded information transmitted through the security medium.

In addition, the color and pattern of some areas of the color code may be changed by the application of a magnetic field.

A method of manufacturing a security medium according to the present invention may include forming a printing layer by applying the MTX on the surface of the medium to print security information; arranging particles of the MTX that react to the electromagnetic field by applying an external electromagnetic field to the printing layer; and curing the printing layer to form a color code.

### ADVANTAGEOUS EFFECTS OF DISCLOSURE

A security medium according to the present invention is capable of displaying security information by allowing a color code printed on a surface of the medium to change in color, pattern, image and/or data according to an observation angle and to be decoded at a specific observation angle, can display security information without a separate means such as application of an external magnetic field, and can be applied to various security media because the security medium can store data-formed security information, in addition to the visual effect

### BRIEF DESCRIPTION OF DRAWINGS

FIG. 1 is a conceptual diagram illustrating an operation method for implementing a security medium according to the present invention.
FIG. 2 is an exemplary diagram of implementing a security medium according to the present invention in a bill.
FIGS. 3A and 3B are flowcharts illustrating a method of forming a color code a method of identifying information by decoding, respectively, according to an embodiment of the present invention.
FIG. 4 is a schematic diagram illustrating a process of identifying color code information and outputting a result according to the exemplary embodiment.
FIG. 5 is a photograph showing a process in which pixels printed on a surface of a security medium vary according to an observation angle, and (a), (b) and (c) show a state in which a pattern at 90°, 60°, and 30° changes (above) and one pixel changes (below), respectively.
FIG. 6A and 6B are flowcharts illustrating a method of forming a color code and a method of identifying information by decoding, respectively, according to another embodiment.

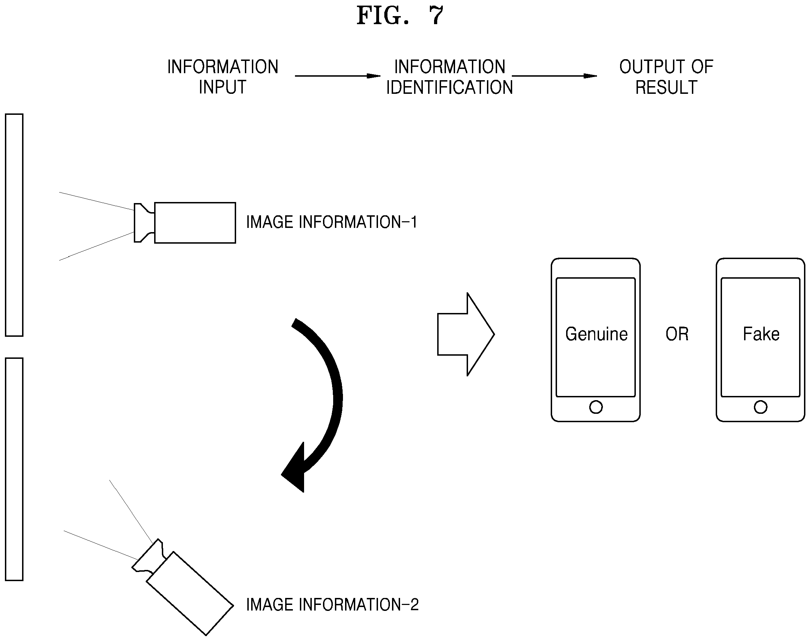

FIG. 7 is a schematic diagram illustrating a process of identifying color code information and outputting a result according to the embodiment.
FIG. 8 is an exemplary view showing a process in which a color code is changed and displayed when bending by an external pressure applied to a security medium in another embodiment.
FIG. 9 is a schematic diagram showing a method of identifying information on a security medium having a color code printed on a transparent substrate, shows an information identification method for observing a reflected image as in (a) and a transmitted image as in (b), and shows a photograph showing a state when a color code printed on a transparent substrate as in (c) is placed on a white background as in (d), a black background as in (e), and a complementary color background as in (f).
FIG. 10 is an exemplary diagram showing a method of identifying information on a security medium in which a color and a pattern change in some area of a color code by application of a magnetic field, (a) shows a process in which a color code printed on the surface of a bill is changed according to the viewing angle, and (b) shows a process in which a color and pattern are changed when a magnetic material is approached.
FIG. 11 is a cross-sectional view showing a stacked structure of a forgery and tampering prevention device according to another embodiment of the present invention.
FIG. 12 is a cross-sectional view showing a stacked structure of a forgery and tampering prevention device according to another embodiment.
FIG. 13 is a cross-sectional view showing a stacked structure of a forgery and tampering prevention device according to another embodiment.
FIG. 14 is an exemplary view showing a method in which a security material layer including a magneto-photonic crystal material as in (a) and a security material layer including an optically variable interference material as in (b) operate by application of an external magnetic field, in the forgery and tampering prevention device of the present invention.
FIG. 15 is a schematic diagram showing the structure and operation principle of a security medium according to another embodiment.

### MODE OF DISCLOSURE

Hereinafter, the present invention will be described in detail.

A security medium according to the present invention is a security medium in which a color code for security information is printed on a surface of the medium using magnetically color tunable photonic crystal ink. In the security medium, colors, patterns, images, and/or data for displaying security information may be visually changed according to an observation angle. The security medium may display information obtained by decoding the color, pattern, image and/or data appearing at a specific observation angle.

In the present invention, the color code refers to any form in which security information is hidden through colors, patterns, images and/or data that vary according to the observation angle. Coding refers to the process of producing the color code, and decoding refers to displaying user-recognizable security information that appears when the color code displays a specific color, pattern, image and/or data at a specific observation angle..

In addition, in the present invention, the observation angle is an angle at which the surface of the security medium is observed by a user, a scanning device, or a photographing device, and means observing the surface of the security medium at an angle of 0° to 180° with respect to the surface.

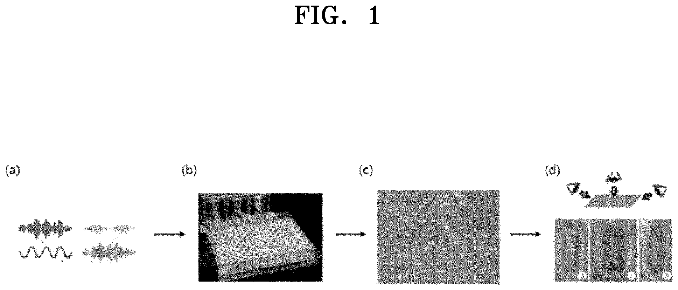

The color code and the process in which the color code is decoded to display information may be understood through FIG. 1.

In FIG. 1, an operation method for implementing the secure medium according to the present invention is described. First, as shown in (a) of FIG. 1, an optical wavelength at which a user may recognize security information at a specific observation angle is set as decoding information, and based on the decoding information, any one of color, pattern, image, data to be printed on the medium, or a combination thereof is determined. That is, the display information of the decoding state is determined in advance, and then the display information is changed according to the change of the observation angle, and thus the display information is hidden. In addition, by using the color code, in addition to changes in color, pattern, or image that can be identified simply by a person's observation angle, pixelated data may be scanned or photographed according to the observation angle, and the scanned or photographed pixelated data may be output through a program or application, and thereby a decoded information being displayed.

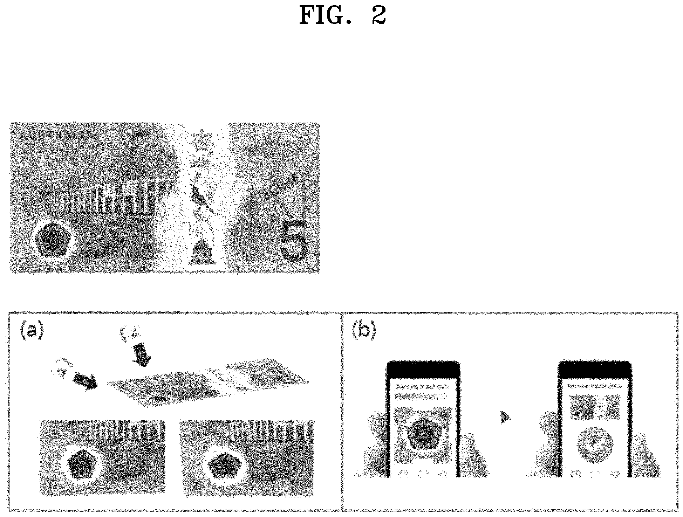

FIG. 2 illustrates an embodiment in which the security medium of the present invention is applied to a banknote. Referring to FIG. 2, since the image of the color code printed on the surface of the banknote corresponding to the surface of the medium is changed according to the user's observation angle, it is possible to visually confirm the authenticity of the bill. In addition, the authenticity of the banknote may be checked using a smartphone. By scanning the color code printed on the surface of the banknote with a smartphone according to the observation angle, it is possible to determine whether the banknote is authentic or not through an application installed on the smartphone.

The color code is printed on the surface of the medium, and the ink used here is magnetically color tunable photonic crystal ink (MTX).

The MTX produces a color variable effect using a photonic crystal technology, and such an effect may be achieved by using particles that react to an electromagnetic field, such as nanoparticles, color nanoparticles, color nanocomposites, or microcapsules including the nanoparticles.

The color nanocomposite may be implemented through the unique color of the particles due to the colorant particles included in the nanocomposite, and at the same time, by applying an electric or magnetic field from the outside, the nanocomposite is rearranged or the state of charge is changed, so that light of a specific wavelength may be transmitted or reflected to implement color. That is, the color nanocomposite has a very uniform particle size for color realization through rearrangement of particles or change of charge state and has a property of easy rearrangement due to high mobility in a medium.

The MTX may be dispersed in the medium, or may exist dispersed in the medium in the form of particles having an electric charge, and may have a core-cell structure or a multi-core-cell structure. For such dispersion, the magnetically color tunable photonic crystal pigment preferably exhibits a uniform size in the range of 50 to 1,000 nm, preferably 100 to 500 nm, more preferably 100 to 300 nm in particle size. However, when the particles include a colorant, the uniformity of the particles may be a more important factor than the particle size, and thus the particles may be out of the range of the particle size.

In addition, the nanoparticles may be conductive particles, metal particles, organometallic particles, metal oxide particles, magnetic particles, hydrophobic organic polymer particles, and may be particles exhibiting photonic crystal properties in which regularity is given to the arrangement and spacing of particles by the application of external energy. For example, the nanoparticles may be made of one or more metals of silicon (Si) and titanium (Ti), Barium (Ba), strontium (Sr), iron (Fe), nickel (Ni), cobalt (Co), lead (Pb), aluminum (Al), copper (Cu), silver (Ag), gold (Au), Tungsten (W), molybdenum (Mo), zinc (Zn), zirconium (Zr), or nitrides or oxides thereof.

In addition, the nanoparticles may be made of a polymer material such as polystyrene, polyethylene, polypropylene, polyvinyl chloride, polyethylene terephthalate as organic material nanoparticles, may include particles whose surface is modified by an organic compound having a hydrocarbon group, particles whose surface is modified by an organic compound having one or more of a carboxyl group, an ester group, and an acyl group, particles whose surface is modified by a complex compound containing a halogen element, particles whose surface is modified by a coordination compound containing amine, thiol, and phosphine, and particles having a charge by forming radicals on the surface.

In addition, the nanoparticles may be particles to which electrical polarization properties are provided. That is, the nanoparticles may include a ferroelectric material in which polarization of ions or atoms is additionally induced to greatly increase the polarization amount as an external magnetic field or electric field is applied for polarization with a medium, a residual polarization amount is present even when no external magnetic or electric field is applied, and hysteresis remains depending on the direction of application of the magnetic or electric field, and may include a paraelectric material or a superparaelectric material in which polarization of ions or atoms is additionally induced to greatly increase the polarization amount as an external magnetic field or electric field is applied, but residual polarization and hysteresis are not left when no external magnetic or electric field is applied.

Such materials may include materials having a perovskite structure. That is, as a material having an ABO₃ structure, a material such as PbZrO₃, PbTiO₃, Pb(Zr,Ti)O₃, SrTiO₃, BaTiO₃, (Ba, Sr)TiO₃, CaTiO₃, LiNbO₃ may be exemplified.

In addition, the nanoparticles may be formed of particles containing single or hetero metal, oxide particles, or photocrystalline particles.

In the case of a metal, an amorphous metal gel is manufactured by adding and dissolving a magnetic precursor and a ligand to a solvent, and heating it to phase-transfer to crystalline particles, wherein the magnetic precursor is selected from the group consisting of a metal nitrate compound, a metal sulfate compound, a metal fluoroacetoacetate compound, a metal halide compound, a metal perchlorate compound, a metal sulfamate compound, a metal steerate compound, and an organic metal compound, and the ligand is selected from the group consisting of an alkyltrimethylammonium halide-based cationic ligand, a neutral ligand such as an alkyl acid, trialkylphosphine, trialkylphosphine oxide, alkylamine, and alkylthiol, and anionic ligands such as sodium alkyl sulfate, sodium alkyl carboxylate, sodium alkyl phosphate and sodium acetate.

At this time, by containing different kinds of precursors, the magnetic properties of the finally obtained particles may be enhanced, or various magnetic materials such as superparamagnetic, paramagnetic, ferromagnetic, antiferromagnetic, ferrimagnetic, diamagnetic may be obtained.

The MTX is dispersed in a medium and rearranged by the application of an electric or magnetic field. Polar or non-polar media may be used as the medium. For example, any one or more of water, methanol, ethanol, propanol, butanol, propylene carbonate, toluene, benzene, hexane, chloroform, halocarbon oil, perchlorethylene, trichloroethylene, isopar-G, isopar-M, isopar-H, a kind of isoparaffin oil may be used as the medium.

In addition, since the MTX may have a unique color and is decoded at a specific observation angle by displaying a color by rearrangement of particles, information of a color code may be changed when a dye or a pigment is added for color combination. Therefore, unlike a conventional display device for a security medium, an additional dye or pigment cannot be used.

In addition, the MTX may include a material that becomes magnetic, that is, magnetized when a magnetic field is applied. In addition, the MTX may use a superparamagnetic material to prevent aggregating between magnetic particles when the external magnetic field is not applied, wherein the superparamagnetic material is magnetized when an external magnetic field is applied but in the superparamagnetic material, when an external magnetic field is not applied, remnant magnetization does not occur.

In addition, in order to ensure that the nanoparticles are well dispersed and not aggregated in the solvent, the surface of the particles may be coated with an electric charge of the same polarity, and in order to prevent the particles from being precipitated in the solvent, the particle surface may be coated with a material having a specific gravity different from that of the particle, or a material having a specific gravity different from that of the particles may be mixed with the solvent.

In addition, the nanoparticles may be configured to reflect light of a specific wavelength, that is, to have a specific color. In more detail, the particles according to the present invention may have a specific color by controlling the oxidation number or coating with an inorganic pigment or pigment. For example, as the inorganic pigment coated on the particles according to the present invention, Zn, Pb, Ti, Cd, Fe, As, Co, Mg, Al, etc. including a chromophore may be used in the form of oxides, emulsions, or sulfates, and fluorescent dyes, acid dyes, basic dyes, mordant dyes, sulfur dyes, bat dyes, disperse dyes, reactive dyes, and the like may be used as dyes coated on the particles according to the present invention.

In addition, the nanoparticles may be coated with a material having a charge so as to have the same charge.

Further, the MTX may include a microcapsule, wherein the microcapsule includes a photonic crystal or a solvent in which photonic crystals having a unique color are dispersed. In this case, the microcapsules may form a capsule wall made of a transparent polymer, so that the photonic crystals are rearranged by the application of a magnetic field to realize color, wherein the transparent polymer is at least one selected from aginate, gelatin, ethyl cellulose, polyamide, melamine-formaldehyde resin, polyvinyl pyridine, polystyrene, a resin containing a urethane bond, and polymethyl methacrylate.

Such microcapsules include microcapsules disclosed in Korean Patent Application Publication No. 10-2017-0124028 and microcapsules disclosed in Korean Patent Publication Nos. 10-2015-0031197, 10-2015-0017796, and 10-2015-0020491 developed by the applicant, may be applied to both an electrophoretic method and a magnetic field application method, so that all of the microcapsules may react to electromagnetic fields applied from the outside.

In the case of printing on the surface of the medium, as shown in Fig. 1(b), the MTX is applied to the surface of the medium using a printer. Unlike general inks, the MTX is applied to the medium and is not immediately cured. This is to prevent the MTX from curing without ultraviolet irradiation or heating by including a photo polymerization initiator or a thermal polymerization initiator.

To do this, the MTX may include the photo polymerization initiator such as benzophenone, benzophenone derivative, acetophenone, acetophenone derivative, benzyl ketone, α-alkoxy benzyl ketone, monomeric hydroxy ketone, polymer hydroxy ketone, α-amino ketone, alkoxy ketone, acyl phosphine oxide, metallocene, benzoin ether, benzyl ketal, α-hydroxyalkylphenone, α-aminoalkylphenone, and acylphosphine, and the thermal polymerization initiator such as an azo compound, an organic peroxide, and hydrogen peroxide.

In addition, after applying the magnetic color variable ink on the surface of the medium using a printer as in FIG. 1(b), particles that react to the electromagnetic field included in the MTX are arranged at a certain angle by applying an electromagnetic field from the outside as in FIG.1(c).

In general, the MTX is arranged by the application of an external electromagnetic field, and then scattered again in a random form when the source of the external electromagnetic field disappears. Therefore, when the arrangement of the particles is completed by the application of the electromagnetic field, heat or ultraviolet rays are applied to cure the particles in the arranged state.

Through this process, the MTX is applied to the surface of the medium to form the color code and then cured.

As described above, the color code changes color, pattern, and/or image as the observation angle changes. This is equivalent to changing the color or image according to the observation angle, as illustrated in FIG. 1(d).

In this case, when security information based on a specific color, pattern, image and/or data, i.e., color, pattern, image, or data, or a combination of two or more thereof, is set as a color code, it is decoded only at a specific observation angle so that the security information may be displayed to the user.

In one embodiment, the security medium according to the present invention may be decoded at one observation angle, and also different decoding information may be displayed at a plurality of observation angles and combined to recognize security information.

To do this, the color code may be formed as data. This is formed through the same process as in FIG. 2(a), and is identified through the same process as in FIG. 2(b).

Referring to FIG. 2(a), the color code, which is the data to be inserted, is determined in advance, and the information to be inserted is converted into binary code and pixel to generate information, and then data is coded through conversion and output of an electromagnetic field signal according to the binary code to generate the color code on the surface of the medium.

In addition, the process of decoding the color code includes selecting a plurality of pixel areas by scanning or photographing a security medium according to an observation angle, as shown in FIG. 2(b), converting the color code of the pixel area into a binary code, and identifying the binary code to display the corresponding data. The security information may be identified thereby. In this case, the scanning or photographing may be performed through a camera, and a process of converting the pixel area into a binary code and displaying data may be performed by a program or application.

In addition, in this case, when different pixels for a plurality of observation angles and the corresponding binary code are hidden, the security information may be identified by combining the binary code obtained by scanning or photographing. Through this combination, it is possible to display more detailed security information than a person perceives a change in color or pattern through an observation angle.

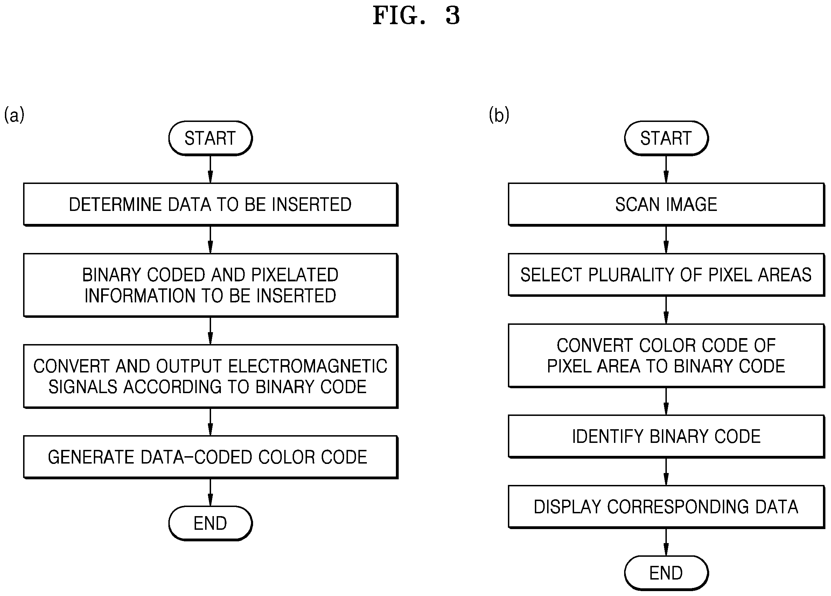

In the most simple way, the above decoding process may be performed using a smartphone. As shown in FIG. 3, image information of a color code formed on the surface of the security medium is scanned or photographed, and the obtained information is input to a smartphone or a computer. The obtained information is identified through a program or application installed on the smartphone or computer, the pixel information is converted into a binary code, and the binary code is identified again and displayed as data, thereby outputting the result. Through this process, it is possible to display various types of information indicating whether it is genuine or fake according to the type of the data.

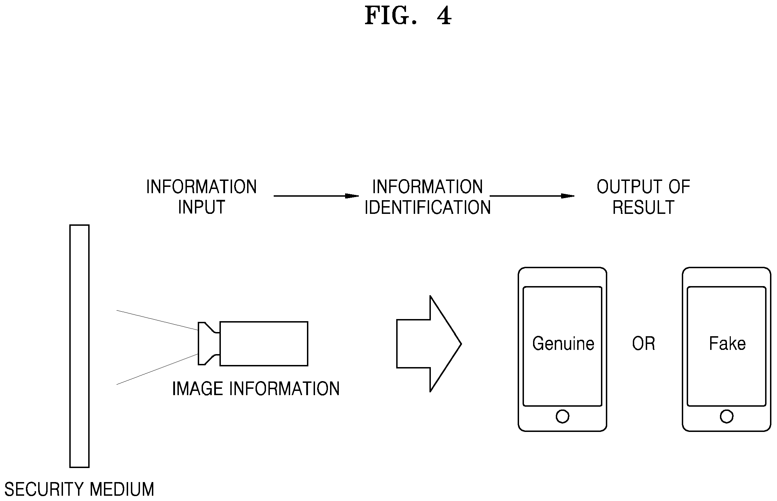

In addition, a process in which the pattern of the pixels constituting the color code changes according to the change of the observation angle may be seen through FIG. 4. In the upper drawing of FIG. 4, when the observation angles for scanning the patterned color code are 90°in (a), 60° in (b), and 30° in (c), a process in which the shape of the pattern at the observation angles is being changed may be seen. In addition, in the lower drawing, as the observation angle changes to 90° in (a), 60° in (b), and 30° in (c), a process in which the shape of one pixel changes from a circle to an ellipse may be seen. That is, even in the case of a color code patterned with the same pixel, because the shape information of each pixel and the shape information of the entire pattern are changed according to the observation angle, it is possible to set the color code to be decoded at a specific observation angle

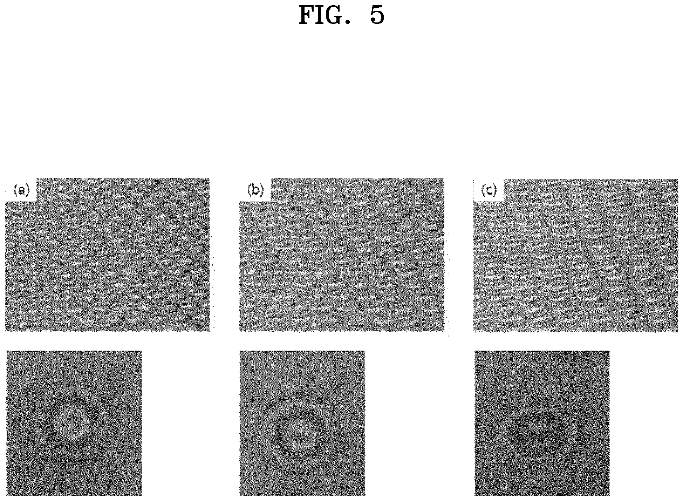

In connection with the above embodiment, identification according to the observation angle may be configured in combination. This may be performed through the process shown in FIG. 5, and decoding may be performed through the steps of determining data at the first observation angle, and confirming and converting information at the second observation angle for the determined data.

Referring to FIG. 5(a), after determining in advance the color code, which is the data to be inserted, and generating the information by converting the information to be inserted into binary code and pixel, data is coded through the conversion and output of the electromagnetic field signal according to the binary code to generate a color code on the surface of the medium. At this time, the color code information at the second observation angle is determined, and the determined color code information is converted into a binary code and a pixel to generate an additional color code.

The security medium that has generated the color code through this process may be decoded as shown in FIG. 5(b). That is, when selecting a plurality of pixel areas by scanning or photographing an image at the first observation angle, converting the color code of the pixel area into a binary code is performed, and then when another plurality of pixel areas are selected by scanning or photographing an image at the second observation angle, converting the color code of the pixel area into a binary code is performed. By comparing the binary code obtained from the first observation angle and the second observation angle, it is possible to determine whether or not the security information matches and display the matching result.

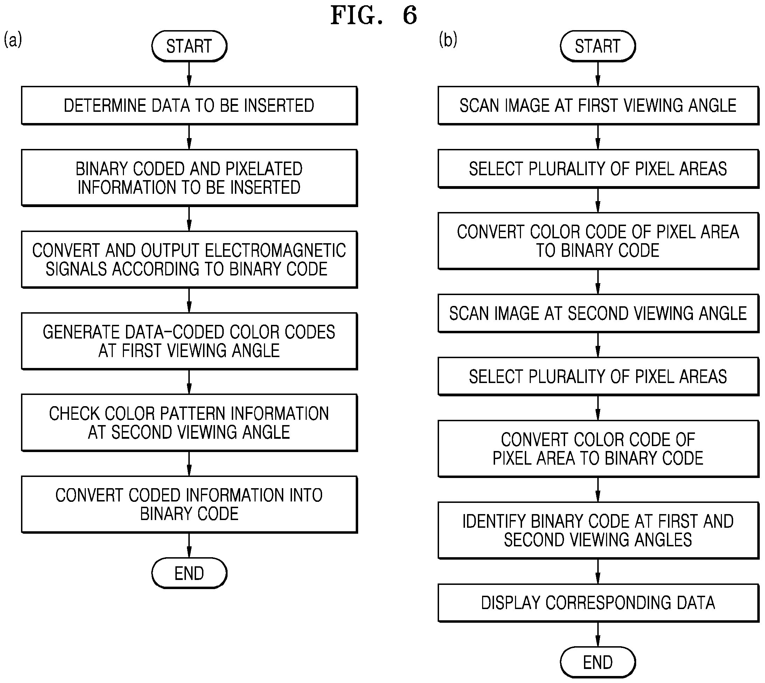

Schematically, as shown in Fig. 6, security information is displayed by both the first color code obtained from the first observation angle and the second color code obtained from the second observation angle. The image information of the color code formed on the surface of the security medium is scanned or photographed while changing the observation angle, and the obtained information is input to a smartphone or computer. The obtained information is identified through a program or application installed in the smartphone or computer, and pixel information is converted into a binary code. The converted binary code is identified again. That is, the result may be output through the process of matching the binary codes corresponding to the first color code and the second color code and displaying the data as data. Through this process, it is possible to display various kinds of security information indicating whether it is genuine or fake according to the value of the data.

In addition, by using a flexible medium, the printed color, pattern, image, and/or data may be changed by a structural change of the security medium that is bent, contracted or expanded by external pressure applied to the security medium. In this case, decoded information may be output from a structure in which a specific shape has been deformed.

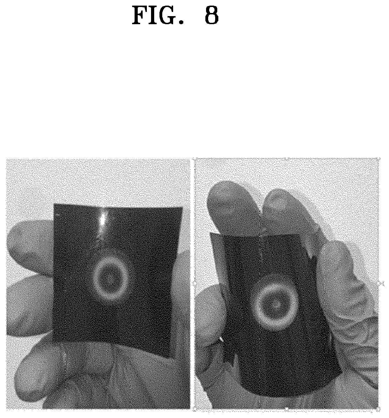

FIG. 8 shows an illustrative example of this. When the flexible security medium is bent to form a curvature, the color distribution of the pattern changes, and through this, various security information indicating genuine and fake may be displayed.

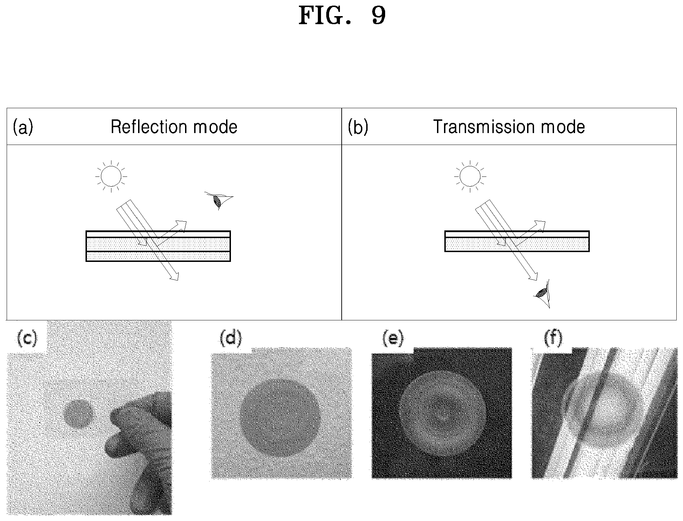

In addition, by using the security medium as a transparent substrate, it may be applied to various information identification methods. Referring to FIG. 9, when a color code is printed on a transparent substrate, the light is divided into reflected light and transmitted light, and the user may observe the reflected light as in FIG. 9(a) or the transmitted light as in FIG. 9(b). In this case, a security element may be further strengthened by displaying decoded information at a specific angle or a specific background color of the reflected or transmitted light.

In detail, as shown in Fig. 9(c), since the reflected light is influenced by the background color, when the background color is white as in (d), black as in (e), and complementary color as in (f), the difference in the pattern of the color code printed on the transparent substrate is clearly revealed. Therefore, the decoded information can be confirmed by changing the background color and observing the reflected light or by observing the reflected or transmitted light from a specific angle.

In addition, the security element may be further strengthened by changing the color and pattern of some areas of the color code in which the color, pattern, image and/or data are changed and displayed according to the observation angle, by the application of a magnetic field.

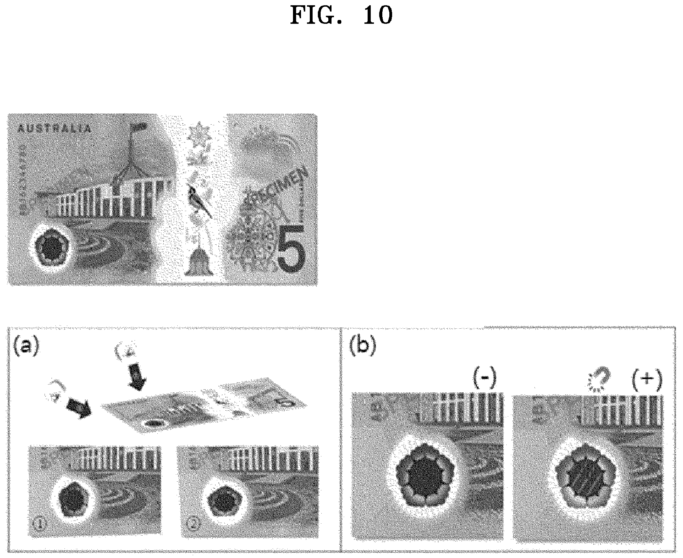

This will be described in detail with reference to FIG. 10. When some area of the color code changes color and pattern by the application of a magnetic field, the color code printed on the surface of the banknote is changed according to the viewing angle as shown in Fig. 10(a), thereby displaying decoded information. At the same time, when the magnetic material is approached from the outside to the surface of the banknote, the color and pattern are changed as shown in FIG. 10(b), so that the decoded information may be displayed, and various combinations of security elements may be added.

Unlike conventional display devices using MTX, such a security medium is superior in versatility and may be used in various security items, because only an external electromagnetic field is applied when forming a color code, and when in use, information may be confirmed simply by changing an observation angle.

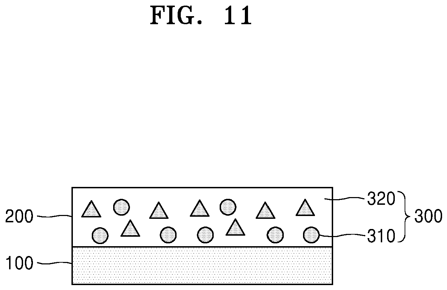

In addition, another embodiment will be described with reference to FIG. 11. the color code may include a security material layer in which a curable ink composition including a magneto-photonic crystal material, one or more dyes and/or pigments is laminated on a substrate. The magneto-photonic crystal material reflecting a specific wavelength in the visible light region by forming a specific crystal structure when a magnetic field is applied from the outside.

The security material layer may include various security information, and may include security information of any one of barcodes, QR codes, numbers, and characters printed in one or two dimensions.

In addition, the security material layer may include security information showing a three-dimensional effect. In this case, the curable ink composition may include an optically variable interference material so that a printed pattern or image may exhibit the three-dimensional effect.

Since the change before and after the application of the external magnetic field may be visually confirmed through the security information, the user may identify whether the product to which the counterfeit and tampering prevention device is attached is genuine.

In order to display various types of security information as described above, in the present invention, various types of ink compositions having different compositions of the curable ink composition constituting the security material layer are applied.

In an embodiment, the curable ink composition may include a magnetic material or magnetizable material that exhibits orientation when a magnetic field is applied from the outside.

In addition, in another embodiment, a color variable material (optical variable interfering material) that changes color according to a viewing angle may be included.

In addition, the curable ink composition may include any one or more of a luminescent pigment, a phosphorescent pigment, a cholesteric liquid crystal pigment, an ultraviolet absorbing material, and an infrared absorbing material. Any one or more of the luminescent pigment, photoluminescent pigment, cholesteric liquid crystal pigment, ultraviolet absorbing material, and infrared absorbing material may be included as a pigment constituting the curable ink composition.

The forgery and tampering prevention device of the present invention constitutes a security material layer by laminating the curable ink composition on a substrate by a method such as printing or coating. The security material layer may be formed as a single layer or may be formed by stacking two or more layers.

The stacked structure of the forgery and tampering prevention device according to an embodiment shows a case in which the security material layer 200 is formed as a single layer on one surface of the substrate 100 as shown in FIG. 11. The curable ink composition 300 constituting the security material layer 200 is composed of a magneto-photonic crystal material 310 and a dye or pigment 320. By having the stacked structure as described above, the forgery and tampering prevention device reflects light for a specific wavelength by rearrangement of the magneto-photonic crystal material 310 when an external magnetic field is applied. As a result, a color variability phenomenon in which the color visually realized by the dye or pigment 320 mixed and distributed with the magneto-photonic crystal material 310 is changed occurs. When security information for a preset color is set using this color variability phenomenon, the user may determine whether the forgery and tampering prevention device is authentic or not by application of an external magnetic field. Through this, the user may check whether the product to which the forgery and tampering prevention device is attached is genuine.

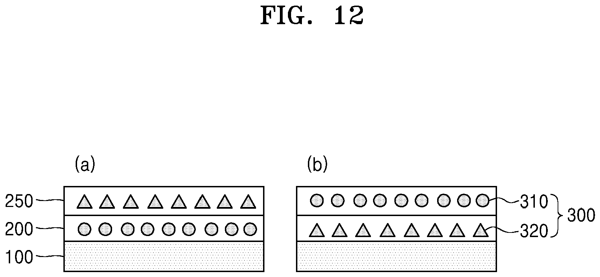

In addition, as shown in FIG. 12, two or more layers may be stacked to form a security material layer. That is, as shown in FIG. 12(a), the first security material layer 200 may be formed on the substrate 100 by the curable ink composition 300 containing the magneto-photonic crystal material 310, and the second security material layer 250 may be formed on the first security material layer 200 by the curable ink composition 300 containing a dye or pigment 320. In addition, as shown in FIG. 12(b), the first security material layer 200 may be formed on the substrate 100 by the curable ink composition 300 containing the dye or pigment 320, and the second security material layer 250 may be formed on the first security material layer 200 by the curable ink composition 300 containing the magneto-photonic crystal material 310.

When an external magnetic field is applied through the stacked structure of two or more layers, only the security material layer 200 formed by the curable ink composition 300 containing the magneto-photonic crystal material 310 is affected. Therefore, since the security material layer of which the color is changed and the security material layer having a unique color by containing a dye or pigment are stacked to show reflected light of a specific wavelength, the user may observe the color variability phenomenon caused by the application of an external magnetic field. Accordingly, when security information for a preset color is set, the user may determine whether the forgery and tampering prevention device is authentic or not by application of an external magnetic field, and may check whether the product to which the forgery and tampering prevention device is attached is genuine.

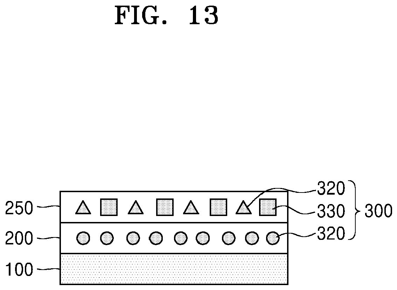

In addition, as shown in FIG. 13, a stacked structure of two or more layers may be formed. In this case, the first security material layer 200 may be formed by the curable ink composition 300 containing the magneto-photonic crystal material 310 on the substrate 100, and the second security material layer 250 may be formed on the first security material layer 200 by the curable ink composition 300 in which the first pigment 320 and the second pigment 330 are mixed.

In this case, as shown in FIG. 12, a color variability phenomenon occurs due to the application of an external magnetic field, and when a luminescent pigment is used as the second pigment, it causes another color variability phenomenon while causing a luminescence phenomenon, so that the security information may be set to double. Through this structural operation, the effect of forgery and tampering prevention may be further strengthened.

Manufacturing the forgery and tampering prevention device according to the present invention may include producing the curable ink composition; forming a security material layer by applying the curable ink composition to a surface of a substrate; forming a specific pattern or image by applying an induced magnetic field to the security material layer; and irreversibly curing by applying energy to the security material layer.

That is, after applying the curable ink composition, a specific pattern or image may be fixed to a unique color or a unique image by applying a magnetic field of a specific intensity, so that the design of the forgery and tampering prevention device may be diversified according to the purpose.

In addition, in the step of forming the specific pattern or image by applying the induced magnetic field to the security material layer, when an electromagnetic field is applied from the outside, the particles reacting to the electromagnetic field included in a magnetically color tunable photonic crystal material are arranged at a certain angle, so that reflected light for a specific wavelength is displayed.

The magnetically color tunable photonic crystal materials arranged in this way are scattered again in a random form when the external magnetic field factor disappears. Therefore, when the particles are arranged by the application of the electromagnetic field, energy is applied to the security material layer to be irreversibly cured. Such energy may include heat or ultraviolet rays capable of curing the ink composition.

In addition, since the curing occurs irreversibly, once curing is completed, the magnetically color tunable photonic crystal material is fixed in a state arranged in a specific direction.

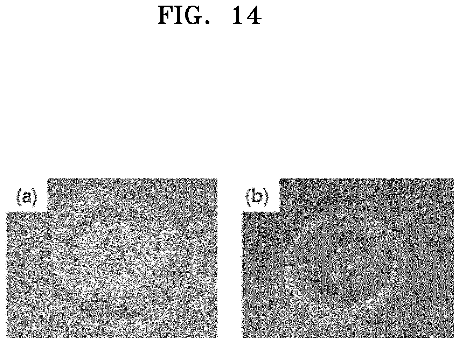

FIG. 14 shows a method in which a security material layer (a) including a magneto-photonic crystal material and a security material layer (b) including an optically variable interference material operate by application of an external magnetic field, in the forgery and tampering prevention device of the present invention,

In the case of the security material layer including the magneto-photonic crystal material, when a magnetic field is applied, the color of a certain portion of the circular pattern changes, so that the user may visually immediately check the color variable effect. In addition, when an optically variable interference material is included, the security material layer exhibits a three-dimensional pattern as shown in FIG. 14(b) by the application of an external magnetic field. Since the change to the three-dimensional pattern is easier to check visually, the user may easily check whether the product to which the forgery and tamper prevention device is attached is genuine.

In addition, the color variable effect of the security printing layer may be converted into digital data. That is, after setting the shape of the variable color or pattern with a designated code in advance and generating the information by converting the information to be inserted into binary code and pixel, data is coded through the conversion and output of the electromagnetic field signal according to the binary code, so that the security information of the forgery and tampering prevention device may be checked.

In this case, instead of visually checking the color variable effect, a plurality of pixel areas are selected by scanning or photographing security information, the color of the pixel area is converted into a binary code, and the corresponding data is displayed by identifying the binary code. Through this process, security information may be identified. Therefore, the scanning or photographing is performed through a camera, and since the process of converting the pixel area to binary code and displaying data may be performed by a program or application, the authentication of genuine product may be performed using a smart device or computer equipped with a camera.

As described above, because the forgery and tampering prevention device according to the present invention may display various security information in a multiple security verification method by applying an external electromagnetic field by using the magnetically color tunable photonic crystal material, the forgery and tampering prevention device is more versatile and may be used for various security articles, compared to conventional forgery and tampering prevention devices

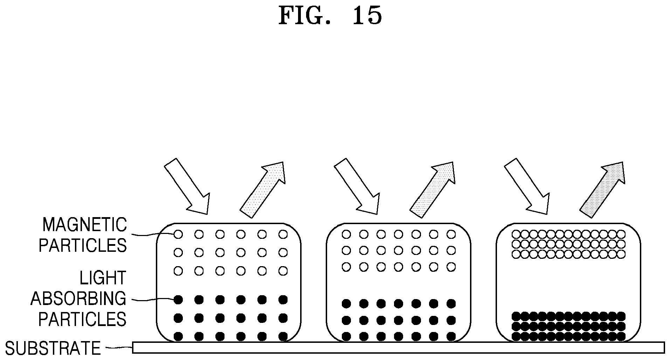

In another embodiment, a different type of color code operation method may be implemented by changing the configuration of the MTX. Fig. 15 shows the structure and operation principle of such a secure medium.

The color code for security information of the security medium may be implemented by MTX including magnetic particles and light absorbing particles. The working structure of various color codes may be implemented by employing a magnetization value of the light absorbing particles larger than the magnetization value of the magnetic particles.

The magnetic particles and light absorbing particles contained in the MTX have different magnetization values. Accordingly, the magnetic particles and the light absorbing particles move according to a change in an external magnetic field, thereby changing a distance between them.

As shown in FIG. 15, in the case that a color code is printed by applying the capsule encapsulated by using a solvent in which a plurality of magnetic particles and light absorbing particles are dispersed as a light-transmitting material, as an ink composition or by filling an ink composition including the plurality of magnetic particles and light absorbing particles on a substrate having a partition wall, when an external magnetic field is applied by approaching a magnetic material to the bottom of the medium, the light is absorbed by the light absorbing particles having a relatively large magnetization value in a region where the color code is visually observed, thereby obtaining an effect of blocking color. In addition, since the distance of the light absorbing particles changes according to the intensity of the external magnetic field, the wavelength of the reflected light changes. Accordingly, by implementing a state in which the color is partially changed in a state where the color is completely blocked, various color variable effect of the color code may be implemented.

It is preferable that the light-absorbing particles have a black color to facilitate light absorption, but some other colors may be employed within a range that serves to absorb light.

Since the light absorbing particles must have a magnetization value greater than that of the magnetic particles, particles obtained by coating or adsorbing a mixed organic pigment composition on particles having a larger magnetization value than the magnetic particles may be used. The mixed organic pigment composition is obtained by mixing a black pigment such as carbon black, aniline black, iron oxide black, titanium oxide, and chromium and an organic pigment, to be blackened. In this case, as a polymer composition composed of a mixture of black dyes, food black dyes, naphthol black direct azo dyes, and acidic azo dyes may be used. The food black dyes may include C. C.I. Food Black 1, C.I. Food Black 2, the naphthol black direct azo dyes may include C.I. Direct Black 9, C.I. Direct Black 17, C.I. Direct Black 38, C.I. Direct Black 51, C.I. Direct Black 60, C.I. Direct Black 102, C.I. Direct Black 107, C.I. Direct Black 122, C.I. Direct Black 142, C.I. Direct Black 154, C.I. Direct Black 168, and the acidic azo dyes may include C.I. Acid Black 2, C.I. Acid Black 31, C.I. Acid Black 52, C.I. Acid Black 140, C.I. Acid Black 187. In addition, the composition may constitute light absorbing particles in combination with a polymer material such as polystyrene (PS), polyethylene (PE), polypropylene (PP), polyvinyl chloride (PVC), and polyethylen terephthalate (PET).

In the conventional security media, in order to realize this color variable effect, a light absorbing layer (black sheet) is additionally laminated on the surface of the media to be manufactured. However, the security medium according to the above embodiment may not include a light absorbing layer because the color variable effect may be implemented without the light absorbing layer. In addition, by making the medium of a transparent or opaque material, the color variable effect through reflection or transmission of light may be appropriately selected and implemented.

In addition, compared to the conventional technology including a light absorbing layer, since the light absorbing particles in the color code may directly absorb the incident light, there is an advantage in that interference and distortion caused by the interfacial reflection may be fundamentally prevented. The interfacial reflection should be understood as including Fresnel reflection, which is a reflection generated when light passes through an interface between materials having different refractive indices of light.

Although the present invention has been described with reference to a preferred embodiment as described above, the present invention is not limited to the above embodiments. And various modifications and changes are possible by a person skilled in the art within the scope of the idea of the present invention, and such modifications and changes are intended to fall within the scope of the present invention and the appended claims.

## Claims

1. A security medium comprising:
a color code for security information printed on a surface of the security medium using a magnetically color tunable photonic crystal ink (MTX),
wherein the color code is a color, pattern, image and/or data printed by the MTX,
the color, pattern, image and/or data display are changed according to the observation angle, and
the color, pattern, image and/or data displayed at least one observation angle are information obtained by decoding the color code.

2. The security medium of claim 1, wherein the MTX is printed on the surface of the medium to form the color code, and then cured.

3. The security medium of claim 1, wherein the color code is formed by applying an external electromagnetic field to the MTX to form an array of particles of the MTX reacting to the electromagnetic field and curing the array of particles.

4. The security medium of claim 1, wherein the MTX is cured by at least one of light energy, thermal energy, and chemical energy.

5. The security medium of claim 1, wherein the color, pattern, image and/or data display of the color code are changed due to a structural change of the security medium that is bent, contracted or expanded by external pressure applied to the security medium.

6. The security medium of claim 1,
wherein the medium is a transparent substrate, and
the color code includes decoded information reflected from the surface of the security medium, or includes decoded information transmitted through the security medium.

7. The security medium of claim 1, wherein the color and pattern of some areas of the color code are changed by the application of a magnetic field.

8. A method of manufacturing the security medium according to claim 1, the method comprising:
forming a printing layer by applying the MTX on the surface of the medium to print security information;
arranging particles of the MTX that react to the electromagnetic field by applying an external electromagnetic field to the printing layer; and
curing the printing layer to form a color code.

9. The security medium of claim 1,
wherein the color code include a security material layer which has a curable ink composition printed on the surface of the medium,
wherein the curable ink composition including one or more dyes and/or pigments and a magneto-photonic crystal material
reflecting a specific wavelength in the visible light region by forming a specific crystal structure when a magnetic field is applied from the outside.

10. The security medium of claim 9, wherein the security material layer includes one or more of security information of one-dimensional or two-dimensional barcode, QR code, number, and character.

11. The security medium of claim 9, wherein the security material layer includes security information showing a three-dimensional effect

12. The security medium of claim 10 or 11, wherein the security information is security information for identifying whether a product is genuine.

13. The security medium of claim 9, wherein the curable ink composition includes a magnetic material or magnetizable material exhibiting orientation when a magnetic field is applied from the outside.

14. The security medium of claim 9, wherein the curable ink composition includes a color variable material whose color changes according to a viewing angle.

15. The security medium of claim 9, wherein the curable ink composition includes any one or more of a luminescent pigment, a phosphorescent pigment, a cholesteric liquid crystal pigment, an ultraviolet absorbing material, and an infrared absorbing material.

16. The security medium of claim 9, wherein the security material layer is formed as a single layer or is formed by stacking two or more layers.

17. A method of manufacturing secure medium comprising:
producing the curable ink composition according to claim 9;
forming a security material layer by applying the curable ink composition on the surface of a substrate;
forming a specific pattern or image by applying an induced magnetic field to the security material layer; and
irreversibly curing by applying energy to the security material layer.

18. The security medium of claim 1, wherein security information of the color code is decoded by a reflected light image or a transmitted light image generated from the security medium, and
the decoding of the security information has been performed when matches a decoding information of a color, pattern, image and/or data at least one specific observation angle and a predetermined decoding information, wherein the color, pattern, image and/or data display are changed according to the observation angle of the reflected light image or transmitted light image, and the set decoding information is the color code..

19. The security medium of claim 18, wherein the decoding of the color code is performed with changing the printed color, pattern, image, and/or data by a structural change of the security medium that is bent, contracted or expanded by an external pressure applied to the security medium.

20. The security medium of claim 19, wherein the color and pattern of some areas of the color code are changed by the application of a magnetic field.

21. The security medium of claim 18, wherein the MTX includes magnetic particles and light absorbing particles, and a magnetization value of the light absorbing particles is greater than a magnetization value of the magnetic particles.

22. The security medium of claim 18, wherein the medium on which the color code for security information is printed does not include a light absorbing layer, and is made of a transparent or opaque material.

23. A method of manufacturing the security medium according to claim 18, the method comprising:
forming a printing layer by applying a magnetically color tunable photonic crystal ink (MTX) on the surface of the medium to print security information;
arranging particles of the MTX that react to the electromagnetic field by applying an external electromagnetic field to the printing layer; and
forming a color code by irreversibly curing the printing layer.

24. The method of claim 23, wherein the irreversible curing is performed by applying at least one of light energy, thermal energy, and chemical energy.
